# EUROPÄISCHE PATENTSCHRIFT

(11) **EP 3 175 434 B1**
(45) Veröffentlichungstag und Bekanntmachung des Hinweises auf die Patenterteilung: **21.07.2021**
(21) Anmeldenummer: 15741186.9
(22) Anmeldetag: 23.07.2015
(51) Int. Cl.: G08G 1/017, G07B 15/04, G08G 1/14

(54) **VERFAHREN UND SYSTEM ZUR ZUFAHRTSKONTROLLE**
METHOD AND SYSTEM FOR ACCESS CONTROL
PROCÉDÉ ET SYSTÈME DE CONTRÔLE D'ENTRÉE

(30) Priorität: 29.07.2014 EP 14178929
(43) Veröffentlichungstag der Anmeldung: 07.06.2017
(73) Patentinhaber: Inventio AG, 6052 Hergiswil (CH)
(72) Erfinder: FINSCHI, Lukas, CH-6030 Ebikon (CH)
(86) Internationale Anmeldenummer: PCT/EP2015/066811
(87) Internationale Veröffentlichungsnummer: WO 2016/016068

(56) Entgegenhaltungen:
- EP-A1- 2 320 385
- EP-A2- 1 160 734
- EP-A2- 1 643 454
- WO-A1-03/036569
- FR-A1- 2 871 601
- US-A1- 2004 233 036
- US-A1- 2012 284 209
- US-A1- 2014 172 518

## Beschreibung

Die hierin beschriebene Technologie betrifft allgemein Einlasskontroll-Verfahren und - Systeme. Die Technologie betrifft insbesondere die Anwendung eines solchen Einlasskontrollen-Verfahrens bzw. Systems in Verbindung mit einer Fahrzeugparkanlage. Verschiedene Ausführungsbeispiele der Technologie betreffen insbesondere ein Registrierungsverfahren bei erstmaligem Benutzen der Fahrzeugparkanlage und ein System für ein solches Registrierungsverfahren.

Eine Fahrzeugparkanlage kann ein einfacher, beispielsweise umzäunten Parkplatz unter freiem Himmel oder eine Gebäudestruktur sein, beispielsweise ein öffentliches Parkhaus oder eine Parkstruktur als Teil eines Geschäfts-, Büro- oder Wohngebäudes. Unabhängig von der konkreten Art der Fahrzeugparkanlage sind die Einfahrt und Ausfahrt üblicherweise durch Schranken, Tore oder ähnliche Barrieren geregelt. Zufahrt haben registrierte Nutzer (z.B. Mitarbeiter von Unternehmen, die in umliegenden Geschäftsgebäuden arbeiten, oder Bewohner des Wohngebäudes) und Besucher (nicht registrierte Nutzer). In beiden Fällen können für die Nutzung der Fahrzeugparkanlage Gebühren erhoben werden.

Um diesen Nutzergruppen eine effiziente Ein- und Ausfahrt aus der Fahrzeugparkanlage zu ermöglichen, sind verschiedene Lösungen bekannt. In einem öffentlichen Parkhaus, zum Beispiel, entnehmen Besucher einen Parkschein und zahlen eine Parkgebühr, die abhängig von der Parkdauer ist. Registrierte Nutzer können dagegen gemäss einer bekannten Lösung an ihren Fahrzeugen RFID-Tags befestigen, die von einem im Einfahrtsbereich positionierten RFID-Lesegerät gelesen werden. Liegt eine Zufahrtsberechtigung vor, wird zum Beispiel eine Schranke geöffnet und der Nutzer kann in die Fahrzeugparkanlage einfahren. Ein solches RFID basiertes System ist beispielsweise bekannt aus US 8,742,949 B2. Die RFID (Radio Frequency Identification) Technologie ist allgemein bekannt; sie beruht auf dem Auslesen von auf einem IC Chip gespeicherten Information mittels Funkwellen durch ein Lesegerät. Der IC Chip befindet sich dabei üblicherweise auf einem Träger. Der Träger mit dem IC Chip ist auch als "electronic tag", "smart tag" oder "electronic label" bekannt. US 2012/284209 A1 offenbart auch ein RFID basiertes System, wobei für jedes Fahrzeug die Telefon-RFID Nummer, die Nummer eines Papier-RFID Tickets und das Kraftfahrzeug-Kennzeichen in der Datenbank eines Servers gespeichert werden.

Eine andere Lösung beruht auf der Erkennung des Kennzeichens eines Fahrzeugs. Beim Annähern an eine Barriere oder Schranke im Bereich der Einfahrt macht eine Digitalkamera Aufnahmen von der Vorderseite oder Rückseite des Fahrzeugs und eine Bildverarbeitungs-Software wertet die Aufnahmen aus, um daraus das Kennzeichen (d.h. die darauf befindliche alphanumerische Zeichenfolge) zu erkennen. Ist das erkannte Kennzeichen in einer Datenbank vorhanden, d.h. das Fahrzeug ist registriert, öffnet das System die Schranke und ermöglicht die Einfahrt in die Parkanlage. Ein solches System ist zum Beispiel bekannt als "LetUgo" System, das von Adaptive Recognition America, Florida, erhältlich und im Produktkatalog "LetUgo - Automated Vehicle Access Control System, Based on Parkit Camera" beschrieben ist.

Verfahren zum Erkennen des Kennzeichens eines Fahrzeugs sind auch Gegenstand von wissenschaftlichen Veröffentlichung, siehe zum Beispiel H. Kwasnicka et al., "License plate localization and recognition in camera pictures", AI-METH 2002 - Artificial Intelligence Methods, November 13-15, Gliwice, Polen; und S. Saha et al., "License Plate Localization from Vehicle Images: An Edge Based Multi-stage Approach", International Journal of Recent Trends in Engineering, Vol. 1, No. 1, May 2009, Seiten 284 - 288.

Die genannten Lösungen basieren auf unterschiedlichen Ansätzen, wobei jedes System Vor- und Nachteile hat. Ein Parkschein kann verloren gehen, so dass am Ende Unklarheit über die tatsächliche Parkdauer bestehen kann. Das RFID-basierte System erfordert, dass der RFID-Tag immer im Fahrzeug mitgeführt wird. Nutzt der Fahrer an einem Tag ein anderes Fahrzeug und vergisst, den RFID-Tag mit ins andere Fahrzeug zu nehmen, wird die sonst reibungslose Einfahrt gestört. Obwohl das Kennzeichen-basierte System den Nachteil des mitzuführen den RFID-Tags vermeidet, erfordert dieses System eine Registrierung der Nutzer. Es besteht daher Bedarf an einer Technologie, die nutzerfreundlicher und flexibler ist.

Ein Aspekt einer solchen verbesserten Technologie betrifft ein Einlass-Kontrollverfahren für eine Fahrzeugparkanlage gemäß Anspruch 1 der beigefügten Ansprüche.

Ein weiterer Aspekt der verbesserten Technologie betrifft ein Einlass-Kontrollsystem für eine Fahrzeugparkanlage gemäß Anspruch 10 der beigefügten Ansprüche.

Diese Technologie, entweder als Verfahren oder als System, ermöglicht ein nutzerfreundliches und flexibles Parken eines Fahrzeuges. Dabei können in flexibler Art und Weise verschiedene Nutzergruppen berücksichtigt werden. Beispielsweise kann ein regelmässiger Nutzer zusammen mit seinem Fahrzeug automatisch bei der Einfahrt registriert werden, ohne dass dazu das Fahrzeug verlassen werden muss oder ein Registrierungsformular oder Ähnliches ausgefüllt werden muss. Der Nutzer präsentiert bei der erstmaligen Einfahrt mit diesem Fahrzeug beispielsweise seinen Mitarbeiterausweis, der ihn als einfahrtberechtigten Nutzer ausweist, und ein Kennzeichenerkennungssystem ermittelt ("liest") das Kennzeichen des Fahrzeugs, woraufhin das Kennzeichen mit dem einfahrtberechtigten Nutzer verknüpft wird. Bei der nächsten Einfahrt wird das Kennzeichen ebenfalls ermittelt und als "bekannt" identifiziert; das Fahrzeug kann dann nahtlos einfahren.

Möchte der Nutzer beispielsweise an einem anderen Tag mit einem anderen Fahrzeug einfahren, wird dieser Registrierungsprozess für dieses Fahrzeug wiederholt. In der Nutzer-Datenbank wird somit ein weiteres Datenpaar (Nutzer, Kennzeichen) gespeichert. Die Technologie ist somit flexibel und passt sich an das Nutzerverhalten der Nutzer an, beispielsweise wenn ein Nutzer gelegentlich einen Zweitwagen oder ein Motorrad fährt.

Die Technologie ist aber auch insoweit flexibel, dass es vor eventuellem Missbrauch schützt. Für einen Nutzer kann zum Beispiel festgelegt sein, wieviel Fahrzeuge (bzw. Kennzeichen) für ihn registriert werden können. Für einen Nutzer, der in einem angrenzenden Wohngebäude wohnt, kann beispielsweise festgelegt sein, dass nur ein Fahrzeug registriert werden darf. In analoger Weise können die Kennzeichen der Fahrzeuge eines Fuhrparks registriert werden, die beispielsweise einer Autovermietung gehören.

Die Freigabe der Einfahrt kann flexibel gestaltet werden. In einer Ausgestaltung wird die Einfahrt in die Fahrzeugparkanlage freigegeben, wenn das den Nutzer identifizierende Merkmal in der Nutzer-Datenbank vorhanden ist. Dadurch wird sichergestellt, dass der berechtigte Nutzer auch bei der ersten Einfahrt zumindest in die Fahrzeugparkanlage einfahren kann, unabhängig von einer Registrierung. In einer anderen Ausgestaltung wird die Einfahrt in die Fahrzeugparkanlage freigegeben, wenn die ermittelte Zeichenfolge einem registrierten Nutzer zugeordnet ist. Dies kann von Vorteil sein, wenn eine Parkordnung vorschreibt, dass jedes Fahrzeug eines berechtigten Nutzers registriert sein muss.

Flexibilität ist zudem gegeben, dass weitere Kriterien, beispielsweise Berechtigungskriterien, festgelegt werden können, um die Einfahrt zu regeln. Die Berechtigungskriterien umfassen eine dem Nutzer zugeteilte Parkberechtigung, eine dem Nutzer zugeteilte maximale Anzahl von Fahrzeugen, eine dem Nutzer zugeteilte Parkzeit und zugelassene Fahrzeugarten. Diese Berechtigungskriterien müssen erfüllt sein, bevor die Einfahrt freigegeben wird. Sind sie nicht erfüllt, bleibt die Einfahrt blockiert, auch wenn beispielsweise der Nutzer bekannt ist.

Die Freigabe der Einfahrt kann durch ein Öffnen einer Barriere erfolgen. Die Barriere kann je nach örtlichen Gegebenheiten auf verschiedene Weise gestaltet werden, beispielsweise als Schranke, Poller, Tor oder ähnlichen Barrieren.

Der Berechtigungsnachweis kann als RFID Karte oder als Träger mit einem Strichcode ausgestaltet sein. Im Fall einer RFID Karte wird eine darauf gespeicherte Identifikationsnummer ausgelesen, die das den Nutzer identifizierende Merkmal darstellt. Wird ein Träger mit einem Strichcode verwendet, ist die durch den Strichcode codierte Information das den Nutzer identifizierende Merkmal. Dadurch kann das System an evtl. bereits im Gebäude verwendete Berechtigungsnachweise angepasst werden.

Die Technologie ist vorzugsweise so ausgestaltet, dass die Einfahrt in die Fahrzeugparkanlage blockiert bleibt, wenn weder das Kennzeichen noch das den Nutzer identifizierende Merkmal in der Nutzer-Datenbank vorhanden sind. Das System wartet in einem solchen Fall ab, ob der Nutzer eine Besucher-Taste drückt. Erst dann wird die Einfahrt freigegeben.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: ein schematisches Ausführungsbeispiel eines Systems zur Verwaltung einer Fahrzeugparkanlage; und
- Fig. 2: ein Ausführungsbeispiel eines Kontrollverfahrens für eine Fahrzeugparkanlage, insbesondere für die Zufahrt zu einer solchen Fahrzeugparkanlage.

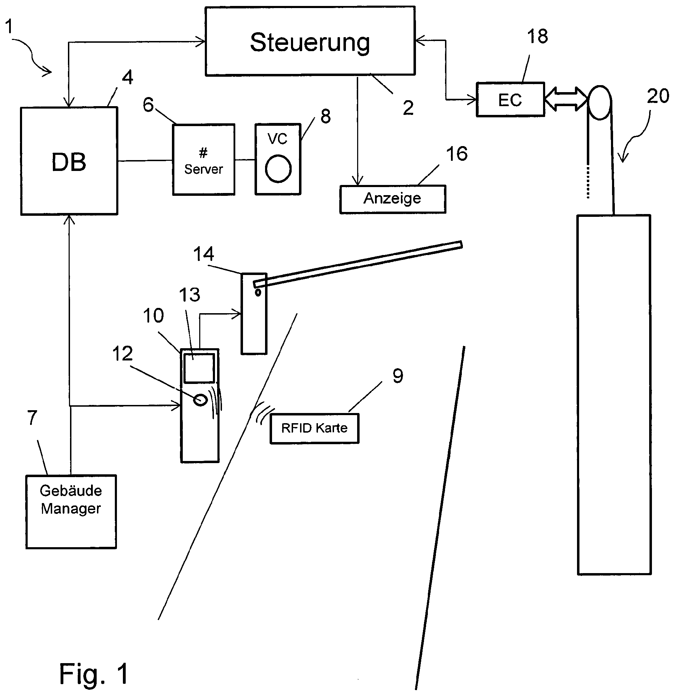

Fig. 1 zeigt ein schematisches Ausführungsbeispiel eines Systems 1 zur Einlasskontrolle von Fahrzeugen in eine Fahrzeugparkanlage in Verbindung mit einer optionalen Aufzugsanlage 20. Die Fahrzeugparkanlage kann ein einfacher, beispielsweise umzäunten Parkplatz unter freiem Himmel oder eine Gebäudestruktur sein, beispielsweise ein öffentliches Parkhaus oder eine Parkstruktur als Teil eines Geschäfts-, Büro- oder Wohngebäudes. Mithilfe von Fig. 1 wird zuerst ein Gesamtüberblick über die allgemeine Struktur des Systems 1 geben, bevor daran anschliessend die verschiedenen Funktionen des Systems 1 und verschiedene Verfahren, die in diesem System 1 ausgeführt werden, beschrieben werden.

Aus Gründen der besseren Übersicht zeigt Fig. 1 nur einen Bereich einer Einfahrt in die Fahrzeugparkanlage. In diesem Bereich der Einfahrt sind eine Schranke 14 als beispielhafte Barriere, ein Terminal 10, eine Kamera (im Folgenden eine Digitalkamera 8), die Teil einer Bildverarbeitungseinrichtung zur Ermittlung einer Zeichenfolge auf einem Kennzeichen eines Fahrzeugs ist, und eine Anzeigevorrichtung 16 angeordnet. Im gezeigten Ausführungsbeispiel hat das Terminal 10 eine Lesevorrichtung 12 und ein Bedienfeld 13. Die Lesevorrichtung 12 ist im gezeigten Ausführungsbeispiel ein RFID Leser, der Information von einer in Reichweite befindlichen RFID Karte 9 (oder einer RFID Plakette (Tag)) liest. Die RFID Karte 9 besteht in bekannter Weise aus einem Träger, auf dem ein IC Chip und eine RF Antenne platziert sind, wobei passive (ohne Energiespeicher (Batterie)) und aktive (mit Energiespeicher) Ausgestaltungen bekannt sind. Jede RFID Karte 9 ist einem Fahrzeug und/oder einem Nutzer zugeordnet, der mit einem Fahrzeug in die Parkanlage einfahren möchte. Aus Gründen der besseren Übersicht zeigt Fig. 1 nur eine RFID Karte 9, ohne den zugehörigen Nutzer bzw. das Fahrzeug.

Neben diesen im Einfahrtsbereich angeordneten Komponenten des Systems 1 umfasst das System 1 im gezeigten Ausführungsbeispiel weitere Einheiten, die mit diesen Komponenten kommunikativ verbunden sind. Zu diesen Einheiten gehören ein Datenbank-Computer 4 (DB), der eine Datenbank enthält (z. B. eine Nutzer-Datenbank), ein Nummernschild-Computer 6 (#server), ein Gebäudemanagement-Computer 7 und eine übergeordnete Steuereinheit 2 (Controller). Der Nummernschild-Computer 6 ist in einem Ausführungsbeispiel Teil der Bildverarbeitungseinrichtung. Die Steuereinheit 2 ist mit der Anzeigeeinheit 16 und dem Datenbank-Computer 4 verbunden. Der Datenbank-Computer 4 wiederum ist mit dem Terminal 10, dem Gebäudemanagement-Computer 7 und dem Nummernschild-Computer 6 verbunden. Der Nummernschild-Computer 6 ist mit der Digitalkamera 8 verbunden, und das Terminal 10 ist mit der Schranke 14 verbunden.

Fig. 1 zeigt die Verbindungen zwischen den einzelnen Komponenten des Systems 1 als einzelne Punkt-zu-Punkt Verbindungen. Der Fachmann erkennt jedoch, dass diese Verbindungen auch anders implementiert werden können, beispielsweise mittels einem Bussystem (zum Beispiel Ethernet, LON, BACNET), einem Funksystem (zum Beispiel ZigBee) oder aus einer Kombination von Bussystem, Funksystem und einzelnen Punkt-zu-Punkt Verbindungen.

Die Digitalkamera 8 ist so angeordnet, dass ein Nummernschild (auch als Kennzeichen bezeichnet) eines Fahrzeugs im Blickfeld der Videokamera 8 ist. Dies ist beispielsweise der Fall, wenn die Digitalkamera 8 vor oder hinter einem einfahrenden Fahrzeug angeordnet ist. Bezogen auf eine Einfahrtrichtung des Fahrzeugs kann die Digitalkamera 8 auch schräg angeordnet sein. Es ist aber auch möglich, dass eine Digitalkamera 8 vor und eine Digitalkamera 8 hinter dem Fahrzeug angeordnet ist, Die Anordnung der Digitalkamera 8 hängt von den in einem Land herrschenden gesetzlichen Bestimmungen bezüglich der Anbringung des Nummernschildes ab. Die optischen Eigenschaften (zum Beispiel Auflösung (z.B. in Megapixel), Belichtung und Brennweite) der Digitalkamera 8 sind so gewählt bzw. eingestellt, dass das Digitalbild auswertbar ist und das Nummernschild in auswertbarer Qualität auf dem Digitalbild erkennbar ist.

Es versteht sich ausserdem, dass die Lichtverhältnisse im Einfahrtsbereich so sind, dass das Nummernschild ausreichend beleuchtet ist. Zusätzlich kann eine Lichtquelle vorhanden sein (beispielsweise eine Infrarot Lichtquelle), die die zu fotografierende Seite des Fahrzeugs beleuchtet. Das Digitalbild liegt beispielsweise im JPEG Format vor, es kann aber auch in einem anderen Format vorliegen, beispielsweise im BMP oder JPEG2000 Format.

Die Digitalkamera 8 macht mindestens eine Aufnahme der Fahrzeugseite. Der Nummernschild-Computer 6 erhält das oder die Digitalbilder von der Digitalkamera 8 und wertet es bzw. sie bezüglich des Kennzeichens aus. Die Auswertung erfolgt mit einer Bildverarbeitungssoftware; der Nummernschild-Computer 6 allein oder in Verbindung mit der Digitalkamera 8 und/oder dem Datenbank-Computer 4 stellt daher in einem Ausführungsbeispiel die oben erwähnte Bildverarbeitungseinrichtung dar, in der die Bildverarbeitungssoftware installiert ist. Als Bildverarbeitungssoftware kann zum Beispiel das oben genannte "LetUgo" System eingesetzt werden. Das Ergebnis der Auswertung durch die Bildverarbeitungssoftware ist eine Zeichenfolge (beispielsweise eine alphanumerische Zeichenfolge), die das Kennzeichen des Fahrzeugs darstellt und diesem Fahrzeug zugeordnet ist.

Die Bildverarbeitungssoftware kann auch ganz oder teilweise in der Digitalkamera 8 enthalten sein; der Nummernschild-Computer 6 kann somit auch entfallen bzw. mit der Digitalkamera 8 eine Einheit bilden. Die Auswertung der Bildverarbeitungssoftware kann somit ganz oder teilweise in der Digitalkamera 8 geschehen, in welchem Falle die Digitalkamera 8 nicht ein Digitalbild, sondern bereits eine teilweise oder ganz ausgewertete Information, z.B. das erkannte Kennzeichen als Zeichenfolge ermittelt. Diese Information erhält der Nummernschild-Computer 6 oder auch direkt der Datenbank-Computer 4 von der Digitalkamera 8. Der Datenbank-Computer 4 ermittelt, ob diese Zeichenfolge (d.h. dieses Kennzeichen) in der Datenbank vorhanden und einem Fahrzeug zugeordnet ist, beispielsweise aufgrund von Daten, die im Datenbank-Computer 4 gespeichert sind. Ist dies der Fall, gilt das Fahrzeug als "bekannt".

Die Kennzeichenauswertung durch die Digitalkamera 8 und/oder dem Nummernschild-Computer 6 kann weitere Merkmale des Fahrzeugs auswerten, z.B. um zu prüfen, ob es sich um ein Fahrzeug handelt, oder um ein Fahrzeug einer bestimmten Farbe, einer bestimmten Grösse, eines bestimmten Modells etc. Dies kann dazu dienen, falsche oder unechte Fahrzeuge oder Kennzeichen zu erkennen, oder auch die Qualität oder die Geschwindigkeit der Erfassung eines Kennzeichens zu verbessern. Dazu können z.B. Informationen der durch die Digitalkamera 8 aufgenommenen Aufnahme bzgl. Form, Grösse oder Farbe ausgewertet werden; insbesondere können Informationen von mehreren Aufnahmen ausgewertet werden (z.B. Aufnahmen von mehreren Kameras, und/oder zu verschiedenen Zeitpunkten aufgenommene Aufnahmen und/oder mit verschiedenen Belichtungen aufgenommene Aufnahmen). Weiter ist es möglich, zusätzliche Sensoren auszuwerten, z.B. Induktions-, Last- oder Temperatur-Sensoren. Die Informationen können auch zusammen mit oder getrennt von der Zeichenkette des erkannten Kennzeichens an den Datenbank-Computer 4, den Nummernschild-Computer 6, oder an einen anderen Computer übermittelt werden, welche z.B. eine Auswertung oder einen Vergleich mit Referenzdaten oder mit anderen erfassten Daten durchführen können und diesbezügliche Informationen zurück an die Digitalkamera 8 und/oder den Nummernschild-Computer 6 übermitteln können.

In Fig. 1 sind die Digitalkamera 8 und der Nummernschild-Computer 6 als getrennte Komponenten gezeigt. Zumindest ein Teil der Daten, die für die Kennzeichenermittlung erforderlich sind, kann in einem Ausführungsbeispiel in dem Datenbank-Computer 4 gespeichert sein. Der Fachmann erkennt jedoch, dass die Funktionalität einer Digitalkamera, eines Nummernschild-Computers und einer Datenbank zu einer Bildverarbeitungseinrichtung zusammengefasst werden können, wie oben erläutert. So bietet zum Beispiel die bereits oben genannte Firma Adaptive Recognition America ein Gesamtsystem ("LetUgo") zur Kennzeichenermittlung an.

Das in Fig. 1 gezeigte beispielhafte System 1 steht zusätzlich in Verbindung mit der Aufzugsanlage 20. Dazu ist die Steuereinheit 2 mit einer Aufzugsteuerung 18 der Aufzugsanlage 20 verbunden. Die Aufzugsanlage 20 ist in Fig. 1 nur ansatzweise dargestellt; der Fachmann erkennt jedoch, dass die Aufzugsanlage 20 nur repräsentativ für verschiedene Ausgestaltungen (zum Beispiel Einzelaufzug, mehrere getrennte Aufzüge in einem Gebäude oder mehreren benachbarten Gebäuden, mehrere zu einer Gruppe zusammengefasste Aufzüge oder so genannte Doppeldeckeraufzüge) ist.

Umfasst die Aufzugsanlage 20 mehrere Aufzüge, zum Beispiel in einem Bürogebäude, ist es gemäss einer Ausgestaltung des Systems von Vorteil, eine so genannte Zielrufsteuerung zur Steuerung der Aufzüge zu verwenden. Das Prinzip einer Zielrufsteuerung ist bekannt, so dass eine detaillierte Beschreibung an dieser Stelle nicht nötig erscheint. Aufzugsanlagen mit einer Zielrufsteuerung werden beispielsweise von der Schindler Gruppe angeboten (z. B. auch in Verbindung mit RFID Lesegeräten für von Passagieren mitgeführte RFID Karten). Die RFID Lesegeräte in Verbindung mit RFID Karten ermöglichen auch eine Zugangskontrolle ins Gebäude bzw. in einen Aufzug.

Die Aufzugsanlage 20 ist wie erwähnt optional. Ist die Aufzugsanlage 20 in einem Ausführungsbeispiel nicht vorhanden, und ist somit keine Kommunikation mit der Aufzugssteuerung 18 erforderlich, kann die Funktionalität der Steuereinheit 2 in eine andere Komponente des Systems 1 integriert sein, so dass keine separate Steuereinheit 2 vorhanden ist. So können beispielsweise der Datenbank-Computer 4 und/oder der Gebäudemanagement-Computer 7, bzw. deren Prozessoren die Funktionalität der Steuereinheit 2 übernehmen. Für diesen Fall sind diese Computer 4, 7 (bzw. die Prozessoren) entsprechend programmiert. Alternativ dazu können in die Computer 4, 7 oder anderen Komponenten des Systems 1 (z. B. dem Terminal 10 oder dem Kennzeichen-Computer 6) weitere Prozessoren installiert und entsprechend programmiert werden.

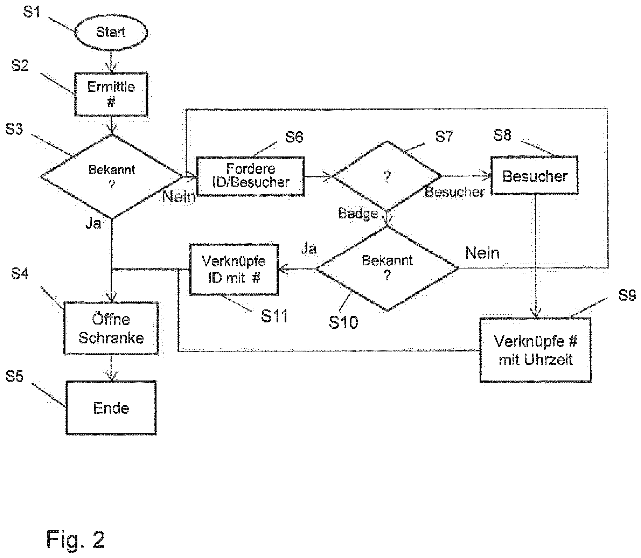

Mit dem Verständnis der allgemeinen Struktur des Systems 1, sind verschiedene Funktionen im Folgenden beispielhaft beschrieben. Fig. 2 zeigt ein Ausführungsbeispiel eines Kontrollverfahrens für eine Fahrzeugparkanlage, insbesondere für die Zufahrt zu einer solchen Fahrzeugparkanlage. Die Personen, die mit ihren Fahrzeugen in die Fahrzeug Parkanlage einfahren möchten, können mehreren Nutzergruppen angehören: regelmässige Nutzer, (unregelmässige/sporadische) Besucher und angemeldete Besucher. Fig. 2 zeigt ein beispielhaftes Ablaufdiagramm des Kontrollverfahrens für diese Nutzergruppen in verschiedenen Szenarien.

Als erstes Szenario erfolgt in Verbindung mit Fig. 1 die Beschreibung des Verfahrens für einen regelmässigen Nutzer. Ein regelmässiger Nutzer kann zum Beispiel eine Person sein, die im oder in einem benachbarten Gebäude wohnt oder arbeitet und deshalb als einfahrtberechtigter, registrierte Nutzer die Parkanlage regelmässig nutzt. Für die Nutzung kann eine Gebühr fällig sein, die monatlich oder jährlich erhoben wird. Auch wenn es ein regelmässiger Nutzer ist, muss der Nutzer und/oder das Fahrzeug des Nutzers anfangs im System 1 registriert werden, da sie im System 1 noch nicht bekannt sind. Das Verfahren beginnt in einem Schritt S1 und endet in einem Schritt S5.

Gemäss einem Ausführungsbeispiel fährt ein regelmässiger Nutzer erstmalig mit seinem Fahrzeug (Personenkraftwagen oder Motorrad) in den Einfahrtsbereich der Parkanlage. Der Nutzer muss an der Schranke 14 anhalten, weil die Schranke 14 geschlossen ist und trotz evtl. Annäherung geschlossen bleibt. In einem Schritt S2 ermittelt das Kontrollverfahren das Kennzeichen des Fahrzeugs. Dazu macht die Digitalkamera 8 eine Aufnahme (Digitalbild) des Kennzeichens bzw. der Seite des Fahrzeugs, an der das Kennzeichen befestigt ist. Der Nummernschild-Computer 6 bestimmt unter Verwendung einer Bildverarbeitungssoftware (s. oben) eine Zeichenfolge, die das Kennzeichen darstellt.

In einem Schritt S3 prüft das Kontrollverfahren mithilfe des Datenbank-Computers 4, ob diese Zeichenfolge in der Datenbank vorhanden ist. Ist dies nicht der Fall, schreitet das Kontrollverfahren entlang des Nein-Zweiges zu Schritt S6. Im Schritt S6 erhält der Nutzer über das Terminal 10 oder die Anzeigevorrichtung 16 eine Aufforderung, entweder einen Berechtigungsnachweis (zum Beispiel einen Parkausweis, einen Bewohnerausweis, einen Mitarbeiterausweis (Badge) oder einen Schlüssel) zu präsentieren oder eine Besucher-Taste zu drücken. Da das hier beschriebene Beispiel einen regelmässigen Nutzer betrifft, präsentiert der Nutzer einen Berechtigungsnachweis, insbesondere einen Badge, und das Lesegerät 12 liest die auf dem Badge gespeicherte Information, beispielsweise eine Identifikationsnummer (ID). Das Verfahren schreitet dann entlang des "Badge-Zweiges" zu Schritt S10.

Ein Berechtigungsnachweis ist in einem Ausführungsbeispiel als RFID Karte ausgestaltet. Der Berechtigungsnachweis identifiziert den Nutzer als zufahrtsberechtigte Person, beispielsweise als Bewohner oder Mitarbeiter. Alternativ zu einer RFID Karte kann der Berechtigungsnachweis auch als Karte mit einem Strichcode ausgestaltet sein. Der Fachmann erkennt, dass der Berechtigungsnachweis nicht als Karte ausgestaltet sein muss, sondern auch einen anderen Formfaktor haben kann. Allgemein gilt, dass die RFID Funktionalität (z. B. realisiert durch Antenne und IC Chip) und/oder der Strichcode auf einem für eine gewisse Anwendung geeigneten Trägermaterial aufgebracht ist. Der Berechtigungsnachweis kann zum Beispiel als eine Art Schlüsselanhänger ("key fob") realisiert sein. Der Fachmann erkennt ausserdem, dass das Lesegerät 12 entsprechend ausgestaltet ist, beispielsweise als RFID Lesegerät oder Strichcode-Lesegerät.

Im Schritt S10 überprüft das Kontrollverfahren, ob die gelesene Information einem bekannten Nutzer zugeordnet ist. Ist der Nutzer nicht bekannt, schreitet das Kontrollverfahren entlang des Nein-Zweiges zurück zu Schritt S6. In einem Ausführungsbeispiel können weitere Berechtigungskriterien festgelegt sein, beispielsweise bezüglich einer dem Nutzer zugeteilten Parkberechtigung, einer dem Nutzer zugeteilten maximalen Anzahl von Fahrzeugen, einer dem Nutzer zugeteilten Parkzeit und zugelassene Fahrzeugarten (z.B. nur PKW, SUV, Motorräder, aber keine LKW, Wohnmobile oder Lieferwagen), maximale Anzahl von Fahrzeugen oder Zeit. So könnte der Nutzer zwar bekannt, aber nicht für die Nutzung der Parkanlage berechtigt sein; auch dann schreitet das Kontrollverfahren entlang des Nein-Zweiges zurück zu Schritt S6. Als weitere Alternative könnte der Nutzer zwar bekannt, aber das Fahrzeug nicht für die Nutzung der Parkanlage zulässig sein; auch dann schreitet das Kontrollverfahren entlang des Nein-Zweiges zurück zu Schritt S6. Weitere alternative Kriterien sind beispielsweise die maximale Anzahl verschiedener Fahrzeuge pro Nutzer und von der Zeit abhängige Berechtigung für die Einfahrt z.B. nur zu Arbeitszeiten. Der Nutzer kann über dieses Ereignis (z.B. "ungültig", "keine Einfahrt" o.ä.) informiert werden, entweder über eine entsprechende Nachricht an der Anzeigevorrichtung 16 oder am Terminal 10, beispielsweise am Bedienfeld 13. Der Nutzer kann dann unter Umständen die Besucher-Taste drücken, um dann, auch wenn er im System bekannt ist, als Besucher (z.B. ausserhalb der Arbeitszeiten) gebührenpflichtig in die Parkanlage einzufahren, Ist dagegen das Fahrzeug nicht für die Nutzung der Parkanlage zulässig, bleibt die Einfahrt blockiert und das Fahrzeug muss die Einfahrt verlassen. Im hier beschriebenen Ausführungsbeispiel ist jedoch angenommen, dass der Nutzer bekannt und kein Besucher ist. Das Kontrollverfahren schreitet deshalb entlang des Ja-Zweiges zu Schritt S11.

Im Schritt S11 verknüpft das Verfahren die gelesene Information mit dem in Schritt S2 ermittelten Kennzeichen. Bei diesem Verknüpfen wird das Kennzeichen als dem Nutzer zugeordnet gespeichert, beispielsweise in der Nutzer-Datenbank, und bildet ein Datenpaar, das evtl. mit weiteren Angaben über den Nutzer und/oder das Fahrzeug ergänzt werden kann. Dem Nutzer können auch weitere Kennzeichen zugeordnet werden, entweder als Ergänzung zum bestehenden Datenpaar oder als neues Datenpaar. Damit ist das Fahrzeug des regelmässigen Nutzers im System 1 registriert. Ein Vorteil ist, dass die Registrierung erfolgt, ohne dass der Nutzer das Fahrzeug verlassen und/oder Registrierungsformulare ausfüllen muss. Das Kontrollverfahren schreitet anschliessend zu einem Schritt S4 weiter.

Im Schritt S4 öffnet das Kontrollverfahren die Schranke 14 und der Nutzer kann mit seinem Fahrzeug in die Parkanlage einfahren. Je nach Ausgestaltung des Kontrollverfahrens kann das Kontrollverfahren die Schranke 14 öffnen, sobald der Nutzer beispielsweise seinen Badge präsentiert. Der Verknüpfungsschritt S11 kann daher auch parallel zum Schritt S4, dem Öffnen der Schranke 14, ausgeführt werden. Das hier beschriebene Kontrollverfahren endet in Schritt S5.

Möchte der regelmässigen Nutzer beim nächsten Mal erneut in die Parkanlage einfahren, kann er das im Wesentlichen unterbrechungsfrei tun, denn das Fahrzeug muss im Idealfall (unter Umständen abhängig von der Reaktionszeit des Systems 1, insbesondere der Schranke 14) nicht mehr anhalten. Das System 1 erkennt in Schritt S3 das Kennzeichen des Fahrzeugs als bekannt und öffnet in Schritt S4 die Schranke 14. Der Nutzer muss dabei seinen Badge nicht mehr an das Lesegerät 12 halten. In einem Ausführungsbeispiel kann die Anzeigevorrichtung 16 eine Begrüssung und/oder Park- oder Fahrinstruktionen anzeigen.

In einem Ausführungsbeispiel kann eine periodische oder unregelmässige Neuvalidierung vorgesehen werden, d.h. von Zeit zu Zeit muss der Nutzer seinen Berechtigungsnachweis wieder vorweisen, wie oben in Verbindung mit Schritt S6 beschrieben. Dies ermöglicht beispielsweise dem Gebäudemanagement, Fahrzeuge ohne dauerhafte Nutzungsberechtigung zu erkennen.

Auch die Ausfahrt aus der Parkanlage ist für den regelmässigen Nutzer möglich, ohne dass das Fahrzeug an einer Schranke anhalten muss. Im Bereich der Ausfahrt aus der Parkanlage ist ebenfalls eine Digitalkamera positioniert, die mit dem Nummernschild-Computer 6 verbunden ist. Das Ermitteln des Kennzeichens erfolgt wie oben beschrieben mittels Bildverarbeitung. Das System 1 erkennt das Kennzeichen des Fahrzeugs als bekannt und öffnet die Schranke im Bereich der Ausfahrt.

Als zweites Szenario erfolgt in Verbindung mit Fig. 2 die Beschreibung des Kontrollverfahrens für einen Besucher. Ein Besucher kann zum Beispiel eine Person sein, die einmalig oder unregelmässig die Parkanlage nutzen möchte, um eine in der Nähe wohnende Person oder befindliche Firma zu besuchen, oder eine andere Angelegenheit zu erledigen. Für die Nutzung kann eine Gebühr fällig sein, die abhängig von der Parkdauer erhoben wird.

Im Schritt S3 der Fig. 2 (ausgeführt wie oben beschrieben) wird das Fahrzeug des Besuchers erwartungsgemäss nicht erkannt und muss an der geschlossenen Schranke 14 anhalten. Im Schritt S6 wird der Besucher aufgefordert, entweder einen Berechtigungsnachweis zu präsentieren oder die Besucher-Taste zu drücken. Im hier beschriebenen Szenario drückt der Besucher die Besucher-Taste. Ist die Besucher-Taste gedrückt, wird in Schritt S7 festgestellt, dass es sich um einen Besucher handelt.

In einem anschliessenden Schritt S9 verknüpft das Kontrollverfahren das Kennzeichen des Fahrzeugs mit der Uhrzeit der Einfahrt in die Parkanlage. Je nach Ausgestaltung des Kontrollverfahrens kann das Kontrollverfahren die Schranke 14 öffnen (Schritt S4), sobald der Besucher die Besucher-Taste gedrückt hat. Der Verknüpfungsschritt S9 kann daher auch parallel zum Schritt S4, dem Öffnen der Schranke 14, ausgeführt werden. Das hier beschriebene Kontrollverfahren für einen Besucher endet ebenfalls in Schritt S5.

In einem Ausführungsbeispiel gibt das Terminal 10 einen Parkschein aus, den der Besucher mitnimmt und am Ende des Aufenthalts zur Bezahlung der Parkgebühr benötigt. Auf dem Parkschein ist gemäss einer Ausgestaltung in bekannter Weise die Ankunftszeit vermerkt. In einem anderen Ausführungsbeispiel erfolgt keine Ausgabe eines Parkscheins; die Aufenthaltsdauer/Parkdauer wird stattdessen anhand des Kennzeichens ermittelt. Am Ende der Parkdauer muss der Besucher an einer Bezahlstelle (Kasse, Rezeption) das Kennzeichen seines Fahrzeugs übermitteln, so dass die Parkgebühr ermittelt werden kann. Ist die Parkgebühr bezahlt, wird die Ausfahrt für dieses Fahrzeug für eine bestimmte Dauer (zum Beispiel 15 oder 20 Minuten) nach der Bezahlung freigegeben.

In einem weiteren Szenario kann der Besucher ein angemeldeter Besucher sein. In einer Ausgestaltung kann sich der Besucher selbst anmelden und das Kennzeichen registrieren bzw. registrieren lassen. Der Nutzer kann das Kennzeichen zum Beispiel über eine Website eingeben oder per E-Mail oder telefonisch an die Verwaltung der Parkanlage oder das Gebäudemanagement mitteilen. Alternativ dazu kann ein Gastgeber oder Empfänger des Besuchers das Kennzeichen registrieren oder bei der Verwaltung oder dem Gebäudemanagement registrieren lassen. In diesem Szenario ist der Besucher somit im System 1 als "Besucher" bekannt.

Bezogen auf Fig. 2 ermittelt das Kontrollverfahren in Schritt S2 das Kennzeichen des Fahrzeugs und erkennt in Schritt S3 das Kennzeichen des Fahrzeugs als bekannt. Entsprechend schreitet das Kontrollverfahren entlang des Ja-Zweiges zum Schritt S4 und öffnet die Schranke 14. Der (registrierte) Besucher kann somit in die Parkanlage einfahren, ohne an der Schranke 14 anhalten zu müssen, um zum Beispiel einen Parkschein zu entnehmen.

In einer Ausgestaltung des Systems 1 gibt es für Besucher, angemeldet oder nicht, ein Leitsystem. Dazu sind die Steuereinheit 2 und die Anzeigevorrichtung 16 so ausgestaltet, dass, wenn ein Besucher einfährt, die Anzeigevorrichtung 16 eine Nachricht oder eine Anweisung anzeigt, die den Besucher auffordert, zu den Besucherparkplätzen zu fahren. Zusätzliche Einrichtungen (beispielsweise beleuchtete oder farblich markierte Richtungsanzeiger, Anzeigen, die die Anzahl der freien Parkplätze anzeigen oder ähnliche Einrichtungen) können vorhanden sein, um den Besucher zu den Besucherparkplätzen zu leiten. In einer Ausgestaltung kann für einen Besucher bereits ein Besucherparkplatz reserviert sein, beispielsweise nahe einem Aufzug (der Aufzugsanlage 20), wenn es sich um eine besonders privilegierte Person (VIP) oder eine Person mit körperlichen Einschränkungen handelt.

Bei der Ausfahrt wird in einer Ausgestaltung des Systems 1 ebenfalls das Kennzeichen erkannt. Ist das Kennzeichen einem regelmässigen Nutzer oder einem Besucher, der die Parkgebühr entrichtet hat, öffnet die Schranke an der Ausfahrt und eine Anzeigevorrichtung, die ebenfalls im Bereich der Ausfahrt angeordnet ist, kann beispielsweise eine "gute Fahrt" wünschen. Öffnet sich dagegen die Schranke nicht, weil beispielsweise die Parkgebühr nicht bezahlt wurde, kann die Anzeigevorrichtung den Nutzer dazu auffordern, die Parkgebühr zu bezahlen oder das Servicepersonal zu kontaktieren.

Der Gebäudemanagement-Computer 7 überwacht die Einfahrt und Ausfahrt von Fahrzeugen aus der Parkanlage. Neben den genannten Funktionen wie zum Beispiel die Überprüfung, ob die Parkgebühr bezahlt wurde, können mit Hilfe des Gebäudemanagement-Computers 7 verschiedene Auswertungen der Nutzung der Parkanlage durchgeführt werden. Die Nutzung der Parkanlage kann beispielsweise über die Zeit, nach Nutzer und/oder Fahrzeug, und/oder nach Art der Nutzer (z. B. regelmässige Nutzer oder Besucher) ausgewertet werden. Derartige Auswertungen erlauben es dem Gebäudemanagement, die Bewirtschaftung der Parkanlage z. B. bezüglich der Öffnungszeiten, der Anzahl oder Art der Parkplätze, der Preisgestaltung, der Information an Nutzer, der Rechnungsstellung zu optimieren.

Wie in Fig. 1 angedeutet, kann in einer Ausgestaltung die Steuereinrichtung 2 mit einer Aufzugsanlage 20 verbunden sein. Dies kann insbesondere für regelmässige Nutzer (Bewohner, Mitarbeiter) von Vorteil sein, da der Berechtigungsnachweis (Badge) sowohl für die Registrierung des Fahrzeugkennzeichens als auch zur Steuerung der Aufzugsanlage 20 benutzt werden kann. Dabei wird davon ausgegangen, dass die Aufzugsanlage 20 mit einer Zielrufsteuerung ausgestattet ist. Die Verwaltung der Berechtigungsnachweise für diese Funktionalitäten kann dann vorteilhafterweise durch den Datenbank-Computer 4 und/oder den Gebäudemanagement-Computer 7 erfolgen,

Die Aufzugsanlage 20 kann in einer Ausgestaltung wie folgt gesteuert werden: Der regelmässige Nutzer ruft, nachdem das Fahrzeug auf einem Parkstockwerk geparkt wurde, mit dem Badge eine Aufzugskabine zum Parkstockwerk, um auf ein Zielstockwerk im Gebäude transportiert zu werden. Die Steuereinrichtung 2 veranlasst dann, dass für diesen Nutzer das Parkstockwerk als temporäres Zielstockwerk definiert wird, das zum Beispiel so lange Gültigkeit hat, bis es durch die Ausfahrt des Fahrzeugs zurückgesetzt wird.

Möchte der Nutzer am Ende des Aufenthalts im Gebäude zurück zum Parkstockwerk und ruft mit dem Badge eine Aufzugkabine zum momentanen Stockwerk (Einsteigestockwerk), wählt die Zielrufsteuerung in einem Ausführungsbeispiel das temporäre Zielstockwerk als Zielstockwerk aus. Alternativ dazu kann die Zielrufsteuerung dem Nutzer das temporäre Zielstockwerk (beispielsweise mit dem Hinweis auf "Parkplatz") zur Auswahl anbieten. Dies kann nützlich sein, wenn der Nutzer während seinem Aufenthalt den Aufzug nutzt, um von einem Stockwerk auf ein anderes Stockwerk zu gelangen. Eine derartige Steuerung der Aufzugsanlage hat für den Nutzer den Vorteil, dass es sich das Parkstockwerk nicht mehr merken muss.

Die vorhergehende Beschreibung erfolgte mit Bezug auf die Figuren 1 und 2, die schematisch spezielle Ausführungen von Komponenten und deren Verbindung untereinander zeigen. So zeigt Fig. 1 beispielsweise die Schranke 14, die geöffnet und geschlossen werden kann. Alternativ zu einer solchen Schranke 14 kann jede andere Art von Barriere verwendet werden, die dazu geeignet ist, die Einfahrt in die Parkanlage zu blockieren und freizugeben. So kann zum Beispiel ein Poller in der Einfahrt installiert sein, der sich hebt und senkt und somit die Einfahrt entweder blockiert oder freigibt. Weitere Alternativen sind sich vertikal oder horizontal bewegende Tore.

Die mit Bezug auf die Figuren 1 und 2 beschriebenen Ausführungen der Komponenten und deren Verbindung untereinander sind als beispielhaft zu verstehen. Der Fachmann erkennt, dass die verschiedenen Funktionalitäten anders aufgeteilt oder zusammengefasst werden können. So kann beispielsweise eine zentrale Computereinheit die Funktionalität des Nummernschild-Computers 6, des Datenbank-Computers 4 und/oder des Gebäudemanagement-Computers 7 ausführen. Entsprechend ändern sich dadurch die in Fig. 1 gezeigten Verbindungen.

Mindestens eines der hier beschriebenen Kontrollverfahren kann durch einen Computer oder eine Computer gestützte Einrichtung ausgeführt werden, die eine oder mehrere Verfahrensschritte ausführt oder veranlasst, Der Computer oder die Computer gestützte Einrichtung enthalten Leseanweisungen zum Ausführen der Verfahrensschritte von einem oder mehreren Computer lesbaren Speichermedien. Diese Speichermedien können beispielsweise flüchtige Speicherkomponenten (z. B. DRAM or SRAM), nicht-flüchtige Speicherkomponenten (z.B. Festplatten, optische Speicherplatten, Flash RAM, oder ROM), oder eine Kombination davon enthalten.

## Patentansprüche

1. Einlass-Kontrollverfahren für eine Fahrzeugparkanlage mit folgenden Schritten:
Ermitteln einer Zeichenfolge auf einem Kennzeichen eines Fahrzeugs unter Verwendung einer Bildverarbeitungseinrichtung (4, 6, 8), wobei eine Einfahrt in die Fahrzeugparkanlage freigegeben wird, wenn die ermittelte Zeichenfolge einem registrierten Nutzer zugeordnet ist, und wobei die Einfahrt in die Fahrzeugparkanlage blockiert wird, wenn das Kennzeichen in einer Nutzer-Datenbank (4) nicht vorhanden ist;
Lesen eines Berechtigungsnachweises unter Verwendung eines Lesegerätes (12), wenn nach dem Ermitteln der Zeichenfolge die Einfahrt in die Parkanlage blockiert wird, wobei der Berechtigungsnachweis einem Nutzer des Fahrzeuges zugeordnet ist und ein den Nutzer identifizierendes Merkmal aufweist;
Bestimmen, ob das den Nutzer identifizierenden Merkmal in der Nutzer-Datenbank (4) vorhanden ist; und
Verknüpfen der ermittelten Zeichenfolge mit dem den Nutzer identifizierenden Merkmal unter Verwendung der Nutzer-Datenbank (4), wenn das den Nutzer identifizierenden Merkmal in der Nutzer-Datenbank (4) vorhanden ist, um so das Kennzeichen des Fahrzeuges als zum Nutzer gehörig zu registrieren, sodass bei einer nächsten Einfahrt in die Fahrzeugparkanlage das Kennzeichen des Fahrzeugs als einem registrierten Nutzer zugeordnet erkannt und die Einfahrt freigegeben wird.

2. Verfahren nach Anspruch 1, ausserdem aufweisend Freigeben einer Einfahrt in die Fahrzeugparkanlage, wenn das den Nutzer identifizierende Merkmal in der Nutzerdatenbank vorhanden ist.

3. Verfahren nach Anspruch 1, ausserdem aufweisend Freigeben einer Einfahrt in die Fahrzeugparkanlage, wenn das den Nutzer identifizierende Merkmal in der Nutzer-Datenbank (4) vorhanden ist und festgelegte Berechtigungskriterien erfüllt sind.

4. Verfahren nach Anspruch 3, wobei die Berechtigungskriterien eine dem Nutzer zugeteilte Parkberechtigung, eine dem Nutzer zugeteilte maximale Anzahl von Fahrzeugen, eine dem Nutzer zugeteilte Parkzeit und/oder zugelassene Fahrzeugarten umfassen.

5. Verfahren nach einem der vorhergehenden Ansprüche, bei dem das Freigeben der Einfahrt ein Öffnen einer Barriere (14) umfasst.

6. Verfahren nach einem der vorhergehenden Ansprüche, bei dem das Lesen des Berechtigungsnachweises ein Auslesen einer auf einer RFID Karte (6) gespeicherten Identifikationsnummer umfasst, die das den Nutzer identifizierende Merkmal darstellt, oder bei dem das Lesen des Berechtigungsnachweises ein Erfassen eines auf einem Träger vorhandenen Strichcodes umfasst, wobei der Strichcode das den Nutzer identifizierende Merkmal darstellt.

7. Verfahren nach einem der Ansprüche 1-5, ausserdem aufweisend Blockieren der Einfahrt in die Parkanlage, wenn festgelegte Berechtigungskriterien nicht erfüllt sind.

8. Verfahren nach Anspruch 7, bei dem die festgelegten Berechtigungskriterien eine dem Nutzer zugeteilte Parkberechtigung, eine dem Nutzer zugeteilte maximale Anzahl von Fahrzeugen, eine dem Nutzer zugeteilte Parkzeit und zugelassene Fahrzeugarten umfassen.

9. Verfahren nach einem der vorhergehenden Ansprüche, ausserdem aufweisend Registrieren des Kennzeichens in der Nutzer-Datenback (4) als zum Nutzer gehörig, wenn das den Nutzer identifizierende Merkmal in der Nutzer -Datenbank (4) vorhanden ist.

10. Einlass-Kontrollsystem (1) für eine Fahrzeugparkanlage, bei der eine Einfahrt durch eine Barriere (14) geregelt ist, umfassend:
eine Bildverarbeitungseinrichtung (4, 6, 8) zur Ermittlung einer Zeichenfolge auf einem Kennzeichen eines Fahrzeugs;
ein Lesegerät (12) zum Lesen eines Berechtigungsnachweises (9), der einem Nutzer des Fahrzeuges zugeordnet ist und ein den Nutzer identifizierendes Merkmal aufweist;
eine Steuereinheit (2), die kommunikativ mit der Bildverarbeitungseinrichtung (4, 6, 8) und dem Lesegerät (12) gekoppelt ist,
wobei die Steuereinheit (2) ausgelegt ist, eine Einfahrt in die Fahrzeugparkanlage freizugeben, wenn eine ermittelte Zeichenfolge einem registrierten Nutzer zugeordnet ist, und wobei die Einfahrt in die Fahrzeugparkanlage blockiert wird, wenn das Kennzeichen in einer Nutzer-Datenbank (4) nicht vorhanden ist,
wobei die Steuereinheit (2) dazu ausgelegt ist, zu bestimmen, ob das den Nutzer identifizierende Merkmal in der Nutzer-Datenbank (4) vorhanden ist, wobei das Lesen eines Berechtigungsnachweises unter Verwendung des Lesegerätes (12) erfolgt, wenn nach dem Ermitteln der Zeichenfolge die Einfahrt in die Parkanlage blockiert wird; und
wobei die Steuereinheit (2) dazu ausgelegt ist, die ermittelte Zeichenfolge mit dem den Nutzer identifizierenden Merkmal zu verknüpfen, wenn das den Nutzer identifizierenden Merkmal in der Nutzer-Datenbank (4) vorhanden ist, um so das Kennzeichen des Fahrzeuges als zum Nutzer gehörig zu registrieren, sodass bei einer nächsten Einfahrt in die Fahrzeugparkanlage das Kennzeichen des Fahrzeugs als einem registrierten Nutzer zugeordnet erkannt und die Einfahrt freigegeben wird.

11. System nach Anspruch 10, ausserdem aufweisend ein Terminal (10), das das Lesegerät (12) und ein Bedienfeld (13) umfasst.

12. System nach einem der Ansprüche 10-11, bei dem die Bildverarbeitungseinrichtung (4, 6, 8) eine Digitalkamera (8), eine Nummernschild-Computer (6) und die Nutzer-Datenbank (4) umfasst.

13. System nach einem der Ansprüche 10-12, bei dem der Berechtigungsnachweis eine RFID Karte (9) ist, auf der eine Identifikationsnummer gespeichert ist, die das den Nutzer identifizierende Merkmal darstellt, oder bei dem der Berechtigungsnachweis ein Träger mit einem darauf vorhandenen Strichcode ist, wobei eine durch den Strichcode codierte Information das den Nutzer identifizierende Merkmal darstellt.

## Claims

1. An access control method for a car park with the following steps:
ascertaining a character string on a registration number of a vehicle using an image processing device (4, 6, 8), wherein clearance for entry into the car park is given if the ascertained character string is assigned to a registered user, and wherein entry into the car park is blocked if the registration number is not present in the user database (4);
reading a credential using a reading device (12), if entry into the car park is blocked after the character string is ascertained, wherein the credential is assigned to a user of the vehicle and has a feature identifying the user;
determining whether the feature identifying the user is present in a user database (4); and
linking the ascertained character string with the feature identifying the user using the user database (4) if the feature identifying the user is present in the user database (4), in order thus to register the registration number of the vehicle as belonging to the user, so that when the next entry into the car park takes place, the registration number of the vehicle is recognised as assigned to a registered user and clearance is given for the entry.

2. The method according to claim 1, further comprising clearance for entry into the car park if the feature identifying the user is present in the user database (4).

3. The method according to claim 1, further comprising clearance for entry into the car park if the feature identifying the user is present in the user database (4) and established eligibility criteria are met.

4. The method according to claim 3, wherein the eligibility criteria include a parking permit assigned to the user, a maximum number of vehicles assigned to the user, a parking time assigned to the user and/or permitted types of vehicle.

5. The method according to any one of the preceding claims, wherein the clearance for entry comprises the opening of a barrier (14).

6. The method according to any one of the preceding claims, wherein the reading of the credential comprises reading out an identification number stored on an RFID card (6), which represents the feature identifying the user, or wherein the reading of the credential comprises the detection of a barcode present on a carrier, wherein the barcode represents the feature identifying the user.

7. The method according to any one of claims 1-5, further comprising blocking entry into the car park if established eligibility criteria are not met.

8. The method according to claim 7, wherein the established eligibility criteria include a parking permit assigned to the user, a maximum number of vehicles assigned to the user, a parking time assigned to the user and permitted types of vehicle.

9. The method according to any one of the preceding claims, further comprising registration of the registration number in the user database (4) as belonging to the user if the feature identifying the user is present in the user database (4).

10. An access control system (1) for a car park, wherein entry is controlled by a barrier (14), comprising:
an image processing device (4, 6, 8) for ascertaining a character string on a registration number of a vehicle;
a reading device (12) for reading a credential (9), which is assigned to a user of the vehicle and has a feature identifying the user;
a control unit (2), which is coupled for communication purposes with the image processing device (4, 6, 8) and the reading device (12),
wherein the control unit (2) is designed to give clearance into the car park if the ascertained character string is assigned to a registered user, and wherein the entry into the car park is blocked if the registration number is not present in a user database (4),
wherein the control unit (2) is designed to determine whether the feature identifying the user is present in a user database (4), wherein a credential is read using the reading device (12) when entry into the car park is blocked after the character string is ascertained; and
wherein the control unit (2) is designed to link the ascertained character string with the feature identifying the user if the feature identifying the user is present in the user database (4), in order thus to register the registration number of the vehicle as belonging to the user, so that when the next entry into the car park takes place, the registration number of the vehicle is recognised as being assigned to a registered user and clearance is given for the entry.

11. The system according to claim 10, further comprising a terminal (10), which comprises the reading device (12) and an operator panel (13).

12. The system according to any one of claims 10-11, wherein the image processing device (4, 6, 8) comprises a digital camera (8), a number plate computer (6) and the user database (4).

13. The system according to any one of claims 10-12, wherein the credential is an RFID card (9), on which an identification number is stored, which represents the feature identifying the user, or wherein the credential is a carrier with a barcode present thereon, wherein information coded by the barcode represents the feature identifying the user.

## Revendications

1. Procédé de contrôle à l'entrée d'un parc de stationnement automobile, comportant les étapes suivantes, consistant à :
déterminer une chaîne de caractères dans une immatriculation d'un véhicule en utilisant un système de traitement des images (4, 6, 8), une entrée dans le parc de stationnement automobile étant validée lorsque la chaîne de caractère est attribuée à un usager, l'entrée dans le parc de stationnement automobile étant bloquée si l'immatriculation n'est pas présente dans une base de données des usagers (4) ;
lire un justificatif d'autorisation en utilisant un lecteur (12), si après la détermination de la chaîne de caractères, l'entrée dans le parc de stationnement est bloquée, le justificatif d'autorisation étant attribué à un usager du véhicule et comportant une caractéristique identifiant l'usager ;
définir si la caractéristique identifiant l'usager est présente dans la base de données des usagers (4) ; et
rattacher la chaîne de caractères déterminée à la caractéristique identifiant l'usager, en utilisant la base de données des usagers (4) si la caractéristique identifiant l'usager est présente dans la base de données des usagers (4), pour enregistrer ainsi l'immatriculation du véhicule comme appartenant à l'usager, de sorte que lors d'une prochaine entrée dans le parc de stationnement automobile, l'immatriculation du véhicule soit reconnue comme étant attribuée à un usager enregistré et que l'entrée soit validée.

2. Procédé selon la revendication 1, comportant par ailleurs la validation d'une entrée dans le parc de stationnement automobile, si la caractéristique identifiant l'usager est présente dans la base de données des usagers.

3. Procédé selon la revendication 1, comportant par ailleurs la validation d'une entrée dans le parc de stationnement automobile, si la caractéristique identifiant l'usager est présente dans la base de données des usagers (4) et si des critères d'autorisation fixés sont satisfaits.

4. Procédé selon la revendication 3, les critères d'autorisation comprenant une autorisation de stationnement attribuée à l'usager, un nombre maximum de véhicules attribué à l'usager, un temps de stationnement attribué à l'usager et/ou des types de véhicules agréés.

5. Procédé selon l'une quelconque des revendications précédentes, lors duquel la validation de l'entrée comprend une ouverture d'une barrière (14).

6. Procédé selon l'une quelconque des revendications précédentes, lors duquel la lecture du justificatif d'autorisation comprend une lecture d'un numéro d'identification mémorisé sur une carte RFID (6) qui représente la caractéristique identifiant l'usager, ou lors duquel la lecture du justificatif d'autorisation comprend une détection d'un code à barres présent sur un support, le code à barres représentant la caractéristique identifiant l'usager.

7. Procédé selon l'une quelconque des revendications 1 à 5, comportant par ailleurs le blocage de l'entrée dans le parc de stationnement si des critères d'autorisation fixés ne sont pas satisfaits.

8. Procédé selon la revendication 7, lors duquel les critères d'autorisation fixés comprennent une autorisation de stationnement attribuée à l'usager, un nombre maximum de véhicules attribué à l'usager, un temps de stationnement attribué à l'usager et/ou des types de véhicules agréés.

9. Procédé selon l'une quelconque des revendications précédentes, comportant par ailleurs l'enregistrement de l'immatriculation dans la base de données des usagers (4) comme appartenant à l'usager si la caractéristique identifiant l'usager est présente dans la base de données des usagers (4).

10. Système de contrôle à l'entrée (1) d'un parc de stationnement automobile, dans lequel l'entrée est réglementée par une barrière (14), comprenant :
un système de traitement des images (4, 6, 8), destiné à déterminer une chaîne de caractères dans une immatriculation d'un véhicule ;
un lecteur (12), destiné à lire un justificatif d'autorisation (9) qui est attribué à un usager du véhicule et une caractéristique identifiant l'usager ;
une unité de commande (2), qui est connectée en communication avec le système de traitement des images (4, 6, 8) et avec le lecteur (12),
l'unité de commande (2) étant conçue pour valider une entrée dans le parc de stationnement automobile si une chaîne de caractères déterminée est attribuée à un usager enregistré et l'entrée dans le parc de stationnement automobile étant bloquée si l'immatriculation n'est pas présente dans une base de données des usagers (4),
l'unité de commande (2) étant conçue pour déterminer si la caractéristique identifiant l'usager est présente dans la base de données des usagers (4), la lecture d'un justificatif d'autorisation s'effectuant en utilisant un lecteur (12), si après la détermination de la chaîne de caractères, l'entrée dans le parc de stationnement est bloquée ; et
l'unité de commande (2) étant conçue pour rattacher la chaîne de caractères avec la caractéristique identifiant l'usager, si la caractéristique identifiant l'usager est présente dans la base de données des usagers (4), pour enregistrer ainsi l'immatriculation du véhicule comme appartenant à l'usager, de sorte que lors d'une prochaine entrée dans le parc de stationnement automobile, l'immatriculation du véhicule soit reconnue comme étant attribuée à un usager enregistré et que l'entrée soit validée.

11. Système selon la revendication 10, comportant par ailleurs un terminal (10), qui comprend le lecteur (12) et un tableau de commande (13).

12. Système selon l'une quelconque des revendications 10 ou 11, dans lequel le système de traitement des images (4, 6, 8) comprend une caméra numérique (8), un ordinateur doté d'un pavé numérique (6) et la base de données des usagers (4).

13. Système selon l'une quelconque des revendications 10 à 12, dans lequel le justificatif d'autorisation est une carte RFID (9) qui est mémorisée sur une carte d'identification qui représente la caractéristique identifiant l'usager ou dans lequel le justificatif d'autorisation est support portant un code à barres, une information codée par le code à barres représentant la caractéristique identifiant l'usager.
